# EUROPEAN PATENT APPLICATION

(11) **EP 1 783 190 A1**
(43) Date of publication of application: **09.05.2007**
(21) Application number: 05765562.3
(22) Date of filing: 07.07.2005
(51) Int. Cl.: C09K 11/64, C09K 11/08, H01J 11/02

(54) **PHOSPHOR AND METHOD FOR PREPARATION THEREOF AND LIGHT EMITTING DEVICE**

(30) Priority: 23.07.2004 JP 2004215908
(71) Applicant: KABUSHIKI KAISHA TOSHIBA, Tokyo 105-8001 (JP)
(72) Inventor: YOKOSAWA, Nobuyuki, c/o Intellectual Pty Divi., Tokyo 105-8001 (JP)
(74) Representative: HOFFMANN EITLE
(86) International application number: PCT/JP2005/012543
(87) International publication number: WO 2006/008971

(57) **Abstract**

A phosphor, comprising a europium activated alkaline earth metal aluminate phosphor, wherein an atomic composition ratio thereof measured by an XPS is the same as an atomic composition ratio measured by a mass analysis method. A method for preparing the above phosphor comprising burning raw materials for the phosphor by heating in a heating furnace while flowing or rotating them to form a europium activated alkaline earth metal aluminate phosphor having an atomic composition ratio thereof measured by the XPS being the same as an atomic composition ratio measured by the mass analysis method. A luminescence of high luminance can be obtained by excitation with a vacuum ultraviolet ray, and a blue phosphor having a decrease in luminance thereof due to a heating process or the like reduced is realized.

## Description

### TECHNICAL FIELD

The present invention relates to a phosphor, a method for producing a phosphor and a light emitting device, and more specifically to a blue phosphor which is suitable as a phosphor for excitation with a vacuum ultraviolet ray, a method for producing a phosphor, and a light emitting device using the phosphor.

### BACKGROUND ART

Recently, a light emitting device using a short-wavelength vacuum ultraviolet ray which is radiated by a discharge of a rare gas such as xenon (Xe) or the like is being developed as an excitation source for the phosphor. In such a light emitting device is used a phosphor which emits light with a vacuum ultraviolet ray used as an excitation source, namely a phosphor for excitation with the vacuum ultraviolet ray. A plasma display panel (PDP) is known as a display device using the light emission by excitation with the vacuum ultraviolet ray.

The PDP has properties, that it is a large and thin screen type and capable of making digital display, demanded for a display which is a core device of a digital network with the arrival of a multimedia era. And, it is being watched with interest as a digital display device capable of displaying a variety of information with a high degree of definition and high resolution.

As a light emitting device having a vacuum ultraviolet ray as an excitation source, a rare gas discharge lamp using a discharge light emission with rare gas is also known in addition to the display device such as the PDP. The rare gas discharge lamp does not use harmful mercury (Hg), so that it is being used instead of a conventional mercury discharge lamp for the back light of an onboard liquid crystal display and other usages that environment safety is demanded.

Such vacuum ultraviolet ray excitation type light emitting devices use a phosphor excelling in emission property with a vacuum ultraviolet ray by empirically selecting from the known phosphors.

To realize a full color display by the PDP, phosphors for the individual colors blue, green and red for emitting light are required. As the blue phosphor of the full color PDP, a europium activated aluminate phosphor such as (Ba,Sr)MgAl₁₀O₁₇:Eu²⁺ is conventionally known. This phosphor is manufactured by a method that a phosphor materials and a flux are charged into a crucible and heated at a prescribed temperature for burning (See, for example, Patent Document 1).

But, the europium activated aluminate phosphor obtained by the above method had a large difference in composition ratio of atoms configuring the phosphor between the surface and the interior of the particle and had a composition ratio which was largely deviated from a prescribed stoichiometric composition ratio on the phosphor particle surface. As a result, there was a problem that emission luminance becomes low by undergoing a heating process for forming a phosphor film or by ultraviolet irradiation for excitation.
Patent Document 1: JP-A 08-115673 (KOKAI)

### DISCLOSURE OF THE INVENTION

The present invention has been made in view of the above circumstances and provides a blue phosphor capable of obtaining light emission with good color purity and high luminance by excitation with a vacuum ultraviolet ray and having less deterioration in luminance due to a heating process or the like. And, according to another aspect of the invention, there is provided a light emitting device such as a PDP with degradation in luminance remedied.

The phosphor of the invention comprises a europium activated alkaline earth metal aluminate phosphor, wherein an atomic composition ratio thereof measured by X-ray Photoelectron Spectroscopy (XPS) is the same as an atomic composition ratio measured by a mass analysis method.

A method for producing a phosphor of the invention, which is a europium activated alkaline earth metal aluminate phosphor, comprises a step of burning a phosphor material containing elements constituting a host material of the phosphor and an activator or compounds containing the elements by heating in a heating furnace while flowing or rotating them to obtain a europium activated alkaline earth metal aluminate phosphor having an atomic composition ratio measured by X-ray Photoelectron Spectroscopy (XPS) being the same as an atomic composition ratio measured by a mass analysis method.

The light emitting device of the invention has a light emitting layer including the above phosphor of the invention as a blue phosphor for excitation with a vacuum ultraviolet ray.

The phosphor of the invention has an atomic composition ratio on the phosphor particle surface measured by the XPS which is the same as an atomic composition ratio measured by the mass analysis method, so that process degradation of emission luminance is suppressed, and degradation in luminance due to a heating process or ultraviolet irradiation is little. Therefore, by using this phosphor to form a blue phosphor layer, a light emitting device such as a PDP having high emission luminance by exciting with a vacuum ultraviolet ray and the degradation in luminance due to a heating process or the like suppressed can be obtained.

According to the preparation method of the invention, phosphor material is heated in a heating furnace while being flown or rotated by a rotating motion of the furnace about its axis and applied with uniform thermal energy from the entire outer circumference, so that a europium activated alkaline earth metal aluminate phosphor which has a composition ratio of atoms configuring the phosphor uniform from the surface to the inside of the phosphor particle can be obtained.

### BRIEF DESCRIPTION OF THE DRAWINGS

[FIG. 1] Fig. 1 is a diagram schematically showing an example of the burning apparatus for manufacturing a phosphor according to a first embodiment of the invention.
[FIG. 2] FIG. 2 is a sectional view schematically showing a structure of PDP according to a second embodiment of the invention.

### BEST MODE FOR CARRYING OUT THE INVENTION

Preferred embodiments of the invention will be described below. It is to be understood that the invention is not limited to the following embodiments.

The phosphor of the first embodiment of the invention comprises a europium activated barium magnesium aluminate phosphor which is substantially represented by a chemical formula BaMgAl₁₀O₁₇:Eu²⁺, and the composition of atoms configuring the phosphor has a composition ratio measured by X-ray Photoelectron Spectroscopy (XPS) which is the same as a composition ratiomeasured by a mass analysis method.

The XPS is a method for checking a solid surface state (e.g., composition of constituent atoms) by measuring kinetic energy of electrons which are emitted by emission of light (X-rays) of a single color.

Therefore, where a blue emitting phosphor of the embodiment has a composition ratio measured by the XPS, which is the same as a composition ratio measured by the mass analysis method, it means that a composition ratio of atoms configuring the phosphor in the surface of the particle is the same that in the interior of the particle, the phosphor particle as a whole has a uniform composition, and the particle surface also has a prescribed stoichiometric composition ratio.

And, the europium activated barium magnesium aluminate phosphor has a composition ratio measured by the XPS, which is Ba:Mg:Al:Eu:O=0.9:1.0:10.0:0.1:17.0 in molar ratio.

The europium activated barium magnesium aluminate phosphor of the embodiment can be manufactured by a method for burning by heating within a rotary heating furnace.

Specifically, raw material powders including elements constituting a host material of the phosphor and an activator or compounds containing the elements are weighed so to have a desired composition (BaMgAl₁₀O₁₇:Eu²⁺) and thoroughly mixed by a ball mill or the like. As the raw material powders, carbonate, nitrate, oxalate or hydroxide which can be easily decomposed to an oxide by heating can be used other than the oxide. Then, the obtained raw material mixture is supplied into a tubular heating furnace which rotates about its axis (rotates on its axis) and heated to a prescribed burning temperature in the atmosphere. And, the phosphor material is heated for burning while being flown or rotated by the rotations of the heating furnace at a temperature of, for example, 1450 to 1600°C for one to five hours. Then, the burned material is discharged from the heating furnace and cooled.

Such a burning method can also keep an inert gas atmosphere of argon, nitrogen or the like in the interior of the heating furnace. The heating furnace desirably has a rotating speed of 0.5 to 50 rotations per minute. If the rotating speed exceeds 50 rotations per minute, it is hard to control a burning time period. And, it can be configured to heat for a necessary and enough time period in a transfer process by disposing the heating furnace to incline with respect to a horizontal direction and continuously moving the phosphor material from above to below in the heating furnace. The inclined angle of the heating furnace with respect to the horizontal is desirably adjusted depending on the length and the rotating speed of the furnace to keep the phosphor material in the furnace for a time period sufficient for burning.

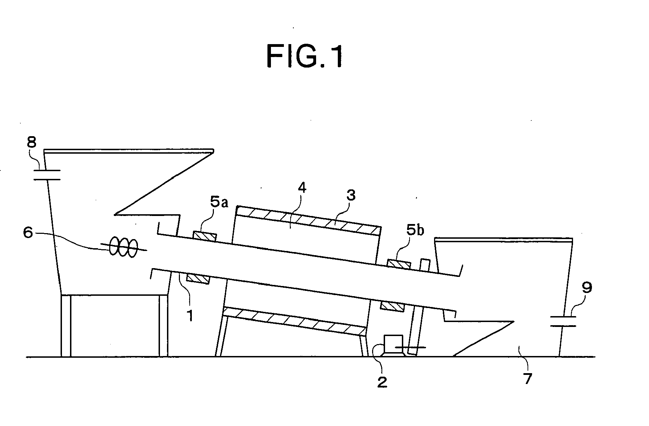

An example of the apparatus for burning used by the burning method of the embodiment is shown in Fig. 1.

In Fig. 1, reference numeral 1 denotes a quartz or alumina round tubular heat resistant vessel. The heat resistant vessel 1 is disposed to incline with respect to the horizontal and configured to be rotated about the central axis by a rotating mechanism 2 such as a motor. And, the inclined angle of the heat resistant vessel 1 with respect to the horizontal is configured to be adjustable depending on a length and a rotating speed of a heating portion so that the phosphor material can be kept at the heating portion for an enough burning time period.

A heat generator 3 of molybdenum silicide or the like is disposed to cover the most of the exterior of the heat resistant vessel 1 from its top end so to configure a heating portion 4. The top and bottom ends of the heat resistant vessel 1, where the heat generator 3 is not disposed around them, are cooling portions 5a, 5b. Cooling is mainly performed by cooling with water.

A feeding mechanism (feeder) 6 for continuously feeding the phosphor material to be heated and burned is disposed at the top end portion of the heat resistant vessel 1, and a burnedmaterial collector 7 for continuously receiving the burned material is disposed at the bottom end portion of the heat resistant vessel 1 configuring the cooling portion 5b.

The atmosphere or inert gas is fed into the heat resistant vessel 1 through a gas introduction port 8 formed in the feeding mechanism 6. The fed atmosphere or inert gas flows together with the burned material within the heat resistant vessel 1 and discharged out through a gas discharge port 9 formed in the burned material collector 7. It is configured to thoroughly cool the burned material in the cooling portion 5b.

According to the burning method using such an apparatus, the phosphor materials is heated while being flown or rotated within the tubular heating furnace, which is disposed to incline with respect to the horizontal and rotated about its axis, so that thermal energy is uniformly applied from the entire outer circumference. As a result, a europium activated barium magnesium aluminate phosphor having a composition ratio of constituent atoms measured by the XPS which is the same as that measured by the mass analysis method and a composition ratio (molar ratio) of Ba:Mg:Al:Eu:O=0.9:1.0:10.0:0.1:17.0 can be obtained.

The phosphor has high emission luminance and less degradation in luminance due to a heating process or ultraviolet irradiation. And, the burning can be completed in a shorter time period in comparison with the burning method using a conventional crucible.

To form a blue phosphor layer by using the phosphor of the embodiment of the invention, the phosphor is mixed with a binder solution, which comprises, for example, polyvinylalcohol, n-butyl alcohol, ethylene glycol, water or the like, to prepare a paste, which is then coated on a substrate by a method such as screen printing or the like. Then, a baking treatment for decomposition and removal of the binder component is conducted by, for example, heating at a temperature of 500°C for one hour. The phosphor layer can also be formed by a known slurry method. In the slurry method, the phosphor is mixed with pure water, polyvinyl alcohol, a photosensitive material such as ammonium dichromate, a surfactant and the like to prepare a phosphor slurry, the slurry being coated by a spin coater or the like and dried, an ultraviolet ray or the like being irradiated for exposure and development. Thus, a phosphor pattern is formed.

The europium activated barium magnesium aluminate phosphor of the first embodiment is suitable as a blue phosphor for excitation with a vacuum ultraviolet ray. A PDP having the blue phosphor layer formed by using the above phosphor will be described.

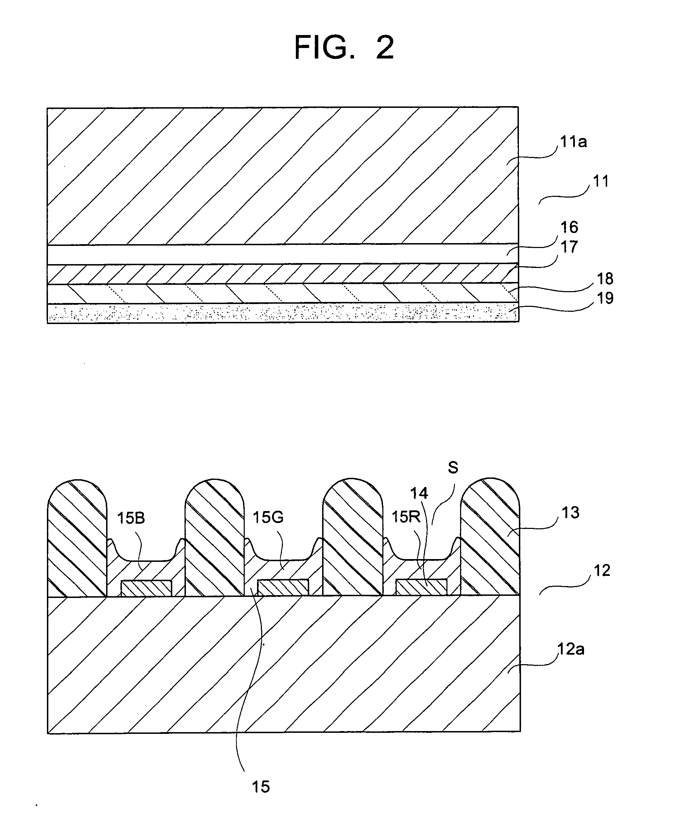

Fig. 2 is a sectional view schematically showing the structure of a PDP (AC plane discharge type PDP) according to the second embodiment of the invention. This PDP has a front substrate 11 and a rear substrate 12. The rear substrate 12 has a rear glass substrate 12a and a plurality of partition walls 13 which are formed thereon in stripes, and stripe-shaped discharge cells S are formed by the partition walls 13 which are formed parallel to each other. Stripe-shaped address electrodes 14 are disposed within the individual discharge cells S specified by the partition walls 13. And, phosphor layers 15 are respectively formed on the rear glass substrate 12a, the address electrodes 14 and the partition walls 13 within the individual discharge cells S.

The phosphor layers 15 include a blue phosphor layer 15B, a green phosphor layer 15G and a red phosphor layer 15R, and one of the three color phosphor layers 15 is formed in the individual discharge cells S. The individual color phosphor layers 15 are arranged to be adjacent to one another.

And, as the blue phosphor configuring the blue phosphor layer 15B, the europium activated barium magnesium aluminate phosphor of the first embodiment is used. As the green phosphor, Zn₂SiO₄ : Mn is used, and as the red phosphor, Y₂O₃:Eu, (Y, Gd) ₂O₃:Eu, YBO₃:Eu, (Y,Gd)BO₃:Eu, GdBo₃:Eu and the like are used, but they are not exclusive.

The front substrate 11 has a front glass substrate 11a, a stripe-shaped transparent electrode 16 which is extended thereon in a direction orthogonal to the above-described address electrodes 14, and a bus electrode 17 which is formed on the transparent electrode 16. The bus electrode 17 is formed to decrease an electrical resistance of the transparent electrode 16. And, a transparent dielectric layer 18 and a protection layer 19 are sequentially formed on the front glass substrate 11a to cover the transparent electrode 16 and the bus electrode 17. The protection layer 19 is formed of, for example, MgO and serves to improve discharge characteristics. The front substrate 11 is placed on the rear substrate 12 to provide sealing. A mixture gas such as He-Xe, Ne-Xe or the like is sealed in the discharge cells S formed between the rear substrate 12 and the front substrate 11.

This AC plane discharge type PDP operates as follows. A plane discharge occurs in the vicinity of the front substrate 11 within the discharge cells S, and a discharge gas mainly emits 147 nm- and 172 nm-wave length vacuum ultraviolet rays. The respective color phosphors in the phosphor layers 15 emit visible light when they are excited by the vacuum ultraviolet rays and return to the ground state.

In the PDP of the second embodiment is used the europium activated barium magnesium aluminate phosphor of the first embodiment as the blue phosphor, so that emission luminance by excitation with a vacuum ultraviolet ray is high, luminance degradation due to a heating process or the like is suppressed, and excellent display characteristics can be obtained.

The europium activated barium magnesium aluminate phosphor of the first embodiment is also suitable as the blue phosphor for the rare gas discharge lamp. In a case where it is applied to the rare gas discharge lamp, the europium activated barium magnesium aluminate phosphor of the embodiment as the blue phosphor is mixed with a green phosphor and a red phosphor for the known excitation with a vacuum ultraviolet ray, and the mixture phosphor is coated on the inner surfaces of glass bulbs to form a light emitting layer (three wavelength type white light emitting phosphor layer). And, electrodes are attached to both ends of the glass bulb, and sealing is conducted with rare gas such as Xe gas or the like filled in the bulb. A voltage is applied between the electrodes of the both ends to cause a rare gas discharge, and the phosphor is excited with the vacuum ultraviolet ray produced by the rare gas discharge to emit light.

The rare gas discharge lamp configured as described above provides high emission luminance and suppresses deterioration in luminance due to a heating process or the like.

### EXAMPLES

Specific examples of the invention will be described below.

### Examples 1 to 5

Materials for the phosphor, such as 27.0 g of barium carbonate, 14.0 g of magnesium carbonate, 76.0 g of aluminum oxide, 0.1 g of aluminum fluoride and 2.6 g of europium oxide, were thoroughly mixed and charged into the heat resistant vessel of the burning apparatus shown in Fig. 1. The heat resistant vessel was disposed at an inclined angle of one degree with respect to the horizontal and rotated about its axis at the speeds indicated in Table 1. And, the heat resistant vessel had an air atmosphere in it. The materials for the phosphor were heated for burning while being flown or rotated in the heat resistant vessel under the conditions (heating temperatures and heating time periods) shown in Table 1.

Then, the obtained burned material was washed with an ion exchange water or the like and dried and, if necessary, sieving or the like was performed to remove coarse particles, thereby obtaining a europium activated barium magnesium aluminate phosphor (BaMgAl₁₀O₁₇ : Eu²⁺).

As a comparative example, the same mixture of the materials for the phosphor as those of Examples 1 to 5 was placed in an alumina crucible and heated for burning in the atmosphere at a temperature of 1550°C for five hours to obtain a europium activated barium magnesium aluminate phosphor.

The europium activated barium magnesium aluminate phosphors obtained by Examples 1 to 5 and the comparative example were measured for the compositions of atoms constituting the phosphors by an ICP (high frequency inductively coupled plasma) mass analysis method and the XPS to determine atomic composition ratios (molar ratios).

The phosphors in the form of powder obtained in Examples 1 to 5 and the comparative example were measured for emission luminance as described below. Specifically, the phosphor powder was placed on a glass substrate having a recessed center portion and pressed from above to form a phosphor film having a thickness of 1 to 2 mm. And, a 146 nm-wave length vacuum ultraviolet ray was irradiated to the phosphor film to examine emission luminance. The emission luminance was determined as a relative value with the emission luminance of the comparative example assumed to be 100%.

Besides, the emission luminance after the baking treatment was measured as follows. Specifically, the phosphor powder was mixed with a binder solution having n-butyl alcohol and ethylene glycol added to a 10% aqueous solution of polyvinyl alcohol to prepare a phosphor paste. Then, the phosphor paste was coated on a substrate by screen printing, dried, and heated at a temperature of 500°C for 30 minutes to decompose and remove a binder component so as to form a blue phosphor layer. And, the 14 6 nm-vacuum ultraviolet ray was irradiated to the phosphor layer to examine emission luminance. The emission luminance was determined as a relative value with the emission luminance of the powder of the comparative example assumed to be 100%. The measured results are shown in Table 1.

**[Table 1]**

| | | | E1 | E2 | E3 | E4 | E5 | CE |
|---|---|---|---|---|---|---|---|---|
| Burning Conditions | Heating temp(°C) | | 1550 | 1550 | 1550 | 1550 | 1550 | 1550 |
| | Heating time (hr) | | 3 | 3 | 3 | 3 | 3 | 5 |
| | Rotating speed (rpm) | | 2 | 3 | 4 | 5 | 10 | - |
| | Inclined angle (°) | | 1 | 1 | 1 | 1 | 1 | - |
| Phosphor composition | ICP | Ba | 0.9 | 0.9 | 0.9 | 0.9 | 0.9 | 0.9 |
| | | Mg | 1 | 1 | 1 | 1 | 1 | 1 |
| | | Al | 10 | 10 | 10 | 10 | 10 | 10 |
| | | ○ | 17 | 17 | 17 | 17 | 17 | 17 |
| | | Eu | 0.1 | 0.1 | 0.1 | 0.1 | 0.1 | 0.1 |
| Molar Ratio | XPS | Ba | 0.9 | 0.9 | 0.9 | 0.9 | 0.9 | 0.8 |
| | | Mg | 1 | 1 | 1 | 1 | 1 | 1 |
| | | A1 | 10 | 10 | 10 | 10 | 10 | 10 |
| | | ○ | 17 | 17 | 17 | 17 | 17 | 20 |
| | | Eu | 0.1 | 0.1 | 0.1 | 0.1 | 0.1 | 0.3 |
| Luminance of Phosphor powder (%) | | | 100 | 101 | 102 | 101 | 103 | 100 |
| Luminance of phosphor film after baking (%) | | | 91 | 91 | 93 | 92 | 93 | 80 |

| | | | | | | | | |
|---|---|---|---|---|---|---|---|---|
| E1=Example 1, E2=Example 2, E3=Example 3, E4=Example 4, E5=Examle 5, CE=Comparative Example | | | | | | | | |

It is seen from the table that the phosphors obtained in Examples 1 to 5 have the same atomic composition ratio on the phosphor surface measured by the XPS as the atomic composition ratio measured by the ICP mass analysis method. And, it is seen that the phosphors of Examples 1 to 5 have less deterioration in luminance after the baking treatment and have the deterioration in luminance due to the heating process reduced.

### INDUSTRIAL APPLICABILITY

The present invention provides a blue phosphor having high luminance and with deterioration in luminance due to a heating process or ultraviolet irradiation reduced. Therefore, by using this phosphor to form a blue phosphor layer, a light emitting device such as a PDP having high emission luminance by excitation with a vacuum ultraviolet ray and with luminance degradation due to a heating process reduced can be obtained.

## Claims

1. A phosphor, comprising a europium activated alkaline earth metal aluminate phosphor,
wherein an atomic composition ratio measured by X-ray Photoelectron Spectroscopy (XPS) is the same as an atomic composition ratio measured by a mass analysis method.

2. The phosphor according to claim 1,
wherein the europium activated alkaline earth metal aluminate phosphor is a europium activated barium magnesium aluminate phosphor, and an atomic composition ratio measured by the XPS is Ba:Mg:Al:Eu:O=0.9:1.0:10.0:0.1:17.0 by molar ratio.

3. A method for producing a phosphor which is a europium activated alkaline earth metal aluminate phosphor, comprising:
burning a phosphor material containing elements constituting a host material of the phosphor and an activator or compounds containing the elements by heating in a heating furnace while flowing or rotating them to obtain a europium activated alkaline earth metal aluminate phosphor having an atomic composition ratio measured by X-ray Photoelectron Spectroscopy (XPS) being the same as an atomic composition ratio measured by a mass analysis method.

4. The method for producing a phosphor according to claim 3,
wherein the phosphor material is burned by heating in a heating furnace rotating about its axis.

5. A light emitting device, having a light emitting layer containing the phosphor according to claim 1 or 2 as a blue phosphor for excitation with a vacuum ultraviolet ray.

6. The light emitting device according to claim 5, further comprising light emitting layers respectively containing a green phosphor and a red phosphor for excitation with a vacuum ultraviolet ray in addition to the blue phosphor and a unit for irradiating the vacuum ultraviolet ray to the light emitting layers, to configure a display portion of a plasma display panel.
